# DEMANDE DE BREVET EUROPEEN

(11) **EP 0 888 944 A1**
(43) Date de publication de la demande: **07.01.1999**
(21) Numéro de dépôt: 98401519.8
(22) Date de dépôt: 22.06.1998
(51) Int. Cl.: B61D 3/16, B61D 27/00, B61G 5/10

(54) **Rame de transport ferroviaire et train à alimentation électrique comprenant une telle rame**

(30) Priorité: 03.07.1997 FR 9708438
(71) Demandeur: GEC ALSTHOM TRANSPORT SA, 75116 Paris (FR)
(72) Inventeur: Jalliffier, François, 69740 Genas (FR); Merlonetti, Nazzareno, 90300 Cravanche (FR)
(74) Mandataire: Gosse, Michel

(57) **Abrégé**

Cette rame (2) comporte plusieurs wagons (4) comprenant chacun une plateforme de transport (8) destinée à recevoir des cellules de stockage (10) équipées d'unités consommatrices d'énergie électrique (12).

Selon l'invention, la rame comprend :
- des moyens de connexion (18, 20, 50, 52) de la rame (2) à une source d'énergie électrique (48) délivrée à une haute tension, supérieure à la tension nominale d'utilisation desdites unités (12) ;
- des moyens de transfert (22, 24, 26) vers chaque wagon (4) d'énergie électrique haute tension ;
- des moyens d'abaissement (30) de la tension, reliés auxdits moyens de transfert (22, 24, 26) d'énergie électrique haute tension, à partir desquels l'énergie électrique est délivrée à une basse tension, voisine de la tension nominale d'utilisation desdites unités (12) ; et
- des moyens de répartition (40, 42, 44, 45) de l'énergie électrique à basse tension vers chaque unité (12).

On peut également prévoir un générateur autonome assurant, notamment, la redondance de l'alimentation électrique des moyens de répartition de l'énergie basse tension.

Application au transport de denrées périssables liquides ou solides, ainsi que de produits chimiques sous température contrôlée.

## Description

La présente invention concerne une rame de transport ferroviaire du type comportant plusieurs wagons comprenant chacun une plateforme de roulement destinée à recevoir des cellules de stockage, notamment sous température contrôlée, ces wagons ou ces cellules de stockage étant équipés d'unités consommatrices d'énergie électrique.

Dans le cadre de l'invention, le terme de "cellule de stockage" désigne par exemple des conteneurs, des caisses, des semi-remorques préhensibles par pinces, des remorques ou d'autres ensembles routiers, susceptibles d'être disposés sur des wagons de type "poche" ou "puits".

De telles cellules de stockage sont utilisées notamment dans le transport de denrées périssables par voie aérienne, maritime, ferroviaire ou routière. Ces cellules de stockage sont équipées d'unités consommatrices d'énergie qui permettent entre autres de maintenir, à l'intérieur de ces cellules, une température contrôlée garantissant l'intégrité des denrées transportées.

Dans le cas d'un transport par voie ferroviaire, une solution consiste à munir ces cellules de stockage de groupes électrogènes à moteur diesel. Ces moteurs génèrent toutefois une importante pollution de l'air ambiant et une nuisance sonore conséquente. Cette solution présente également un désavantage inhérent à la présence de nombreux équipements rapportés qui induisent des coûts supplémentaires liés en particulier à la gestion de ces groupes électrogènes, et des problèmes d'encombrement et de surcharge qui réduisent la charge utile des cellules de stockage. Enfin, ces groupes électrogènes présentent une autonomie limitée et nécessitent un entretien périodique.

Par ailleurs, on connaît, par le document FR-A-2 696 558, un dispositif autonome de délivrance en libre service d'énergie électrique dans le domaine du transport routier. Ce document fait toutefois uniquement référence à l'alimentation, à l'arrêt, d'une unique unité consommatrice d'électricité. Il n'apporte pas de solution à l'alimentation électrique d'un ensemble ferroviaire en ordre de marche.

Afin de pallier les différents inconvénients de l'art antérieur évoqués ci-dessus, l'invention vise la réalisation d'une rame de transport ferroviaire dont l'alimentation en énergie électrique soit fiable, entraîne un surcroît d'encombrement limité et assure une grande autonomie.

A cet effet, l'invention a pour objet une rame de transport ferroviaire du type précité, caractérisée en ce qu'elle comprend :
- des moyens de connexion de ladite rame à une source d'énergie électrique délivrée à une première tension, ou haute tension, supérieure à la tension nominale d'utilisation desdites unités consommatrices d'énergie électrique ;
- des moyens de transfert vers chaque wagon d'énergie électrique à ladite haute tension ;
- des moyens d'abaissement de la tension, comprenant une entrée reliée auxdits moyens de transfert d'énergie électrique à ladite haute tension, et une sortie à partir de laquelle l'énergie électrique est délivrée à une seconde tension ou basse tension, voisine de la tension nominale d'utilisation desdites unités consommatrices d'énergie ; et
- des moyens de répartition de l'énergie électrique à basse tension vers chaque unité consommatrice d'énergie électrique.

L'invention permet de réaliser les objectifs précédemment mentionnés. En effet, elle permet une alimentation fiable de chaque unité consommatrice d'énergie, que ce soit en ordre de marche à partir de la caténaire, ou bien à l'arrêt grâce à une cellule fixe d'alimentation.

En outre, le dispositif d'alimentation conforme à l'invention n'induit qu'un très faible encombrement supplémentaire au niveau des rames de transport.

L'invention permet d'alimenter un nombre quelconque de rames, puisque ces dernières sont susceptibles d'être connectées entre elles. De plus, ces rames peuvent être disposées dans un ordre quelconque dans la mesure où les éléments de connexion entre rames sont identiques.

Le dispositif d'alimentation conforme à l'invention entraîne en outre une nuisance sonore presque inexistante, n'est pratiquement pas polluant, permet l'accès des rames aux tunnels, assure une réduction de la maintenance et une augmentation de l'autonomie.

La rame de transport ferroviaire conforme à l'invention peut comporter une ou plusieurs des caractéristiques suivantes ;
- la source d'énergie électrique haute tension est une source solidaire d'une locomotive assurant l'entraînement de ladite rame ; ce mode de réalisation permet l'alimentation des unités lorsque la rame est en ordre de marche ;
- les moyens de connexion de la rame à la source solidaire de la locomotive comprennent un premier coupleur disposé sur la rame, un second coupleur disposé sur la locomotive, un cordon électrique haute tension reliant lesdits premier et second coupleurs, et des moyens de connexion entre la source et le second coupleur ;
- la source d'énergie électrique est une cellule fixe d'alimentation haute tension ; ce mode de réalisation permet l'alimentation des unités lorsque la rame est à l'arrêt, par exemple à un terminal ferroviaire ;
- les moyens de connexion de la rame à la cellule fixe d'alimentation haute tension comprennent un coupleur disposé sur la rame et relié à ladite cellule fixe par un cordon électrique haute tension ;
- les moyens de transfert vers chaque wagon d'énergie électrique à haute tension comprennent des lignes électriques haute tension reliant des borniers haute tension disposés aux extrémités de chaque wagon, et des cordons électriques haute tension reliant les borniers haute tension des extrémités adjacentes de wagons voisins ;
- les moyens d'abaissement de la tension sont associés à un convertisseur ;
- les moyens de répartition de l'énergie électrique à basse tension comprennent des lignes électriques basse tension reliant des borniers basse tension disposés à chaque extrémité de chaque wagon, des cordons électriques basse tension reliant les borniers basse tension des extrémités adjacentes de wagons voisins, et des moyens de connexion électrique entre chaque plateforme de roulement et sa cellule de stockage correspondante.

Selon un aspect avantageux de l'invention, au moins l'un des wagons est muni d'un générateur autonome apte à délivrer de l'énergie électrique à ladite basse tension.

Ce générateur autonome est constitué d'une machine thermique, par exemple à moteur ou à turbine, couplée directement ou non à un alternateur ou à une génératrice à courant continu, pour remplir sa fonction de groupe électrogène délivrant de la basse tension. Pour assurer une fonction de traction et de freinage autonomes, cette machine thermique peut être couplée, directement ou non, à des composants hydrauliques (motopompe, moteur, boîte de vitesses ...), à des composants électriques (transformateur, redresseur, hacheur ou onduleur, moteur à courant continu ou alternatif ...) ou à des composants mécaniques (arbre(s) de transmission, réducteur, crabots, freins ...), suivant le type de propulsion choisi.

Le ou les moteurs de traction peuvent être soit l'un des moteurs de la locomotive, soit un ou des moteurs situés sur le wagon supportant le générateur-autonome, afin de motoriser un ou plusieurs essieux du wagon.

Le générateur autonome est donc une machine tournante, de type par exemple diesel-alternateur, turbo-alternateur ou bien encore diesel-générateur. Ce générateur autonome peut être éventuellement radio télé-commandé.

Selon une autre caractéristique de l'invention, la sortie du générateur autonome est connectée aux moyens de répartition de l'énergie électrique à basse tension. Ce générateur autonome assume donc une fonction de groupe électrogène et permet une redondance de l'alimentation électrique des moyens de répartition de l'énergie à basse tension. Ceci permet de pallier d'éventuelles pannes des moyens d'abaissement de la tension, ou bien l'absence de cellule fixe d'alimentation haute tension au niveau du terminal, ou bien encore l'absence d'une sortie à haute tension au niveau de la locomotive d'entraînement de la rame.

Selon un aspect avantageux de l'invention, s'agissant d'une rame comprenant au moins un wagon comportant un logement de réception d'une remorque routière, ou poche, les moyens d'abaissement de la tension et/ou le générateur autonome sont disposés dans ce logement. Ceci permet de réhabiliter des wagons poches, dits encore wagons puits, rendus obsolètes du fait de leurs dimensions qui ne sont plus adaptées aux remorques qu'ils doivent recevoir.

L'invention a également pour objet un train à alimentation électrique comprenant une locomotive et plusieurs rames dont chacune est composée de plusieurs wagons, caractérisé en ce que chaque rame est telle que décrite ci-dessus, et en ce qu'il est prévu, entre deux rames voisines, des moyens de connexion en énergie électrique à haute tension.

Les moyens de connexion entre deux rames peuvent comprendre des coupleurs haute tension disposés aux extrémités adjacentes des rames voisines, reliés par des cordons haute tension.

Selon une autre caractéristique de l'invention, la sortie du générateur autonome est mise en relation avec une unité motrice de la locomotive. Ceci permet d'alimenter, de manière autonome, cette locomotive au moyen de l'énergie fournie par le générateur. Ce dernier est alors susceptible d'assurer la propulsion de l'ensemble du train grâce à l'alimentation par exemple d'un des essieux de la locomotive. Ceci est particulièrement avantageux à l'entrée ou à la sortie d'un terminal non électrifié et lors du déplacement d'un train, dont la locomotive roule pantographe baissé.

Selon un premier aspect de l'invention, une autre ligne basse tension, disposée dans le wagon muni du générateur, et un autre cordon électrique basse tension, reliant ce wagon à la locomotive, sont intercalés entre la sortie du générateur autonome et l'unité motrice. Cette dernière est donc alimentée au moyen de la basse tension fournie par le générateur, ce qui permet d'assurer le déplacement de la locomotive à faible vitesse.

Selon un second aspect de l'invention, des moyens d'élévation de la basse tension délivrée par le générateur autonome sont intercalés entre la sortie du générateur autonome et l'unité motrice de la locomotive. Ces moyens d'élévation, qui sont par exemple constitués par un transformateur élévateur, permettent d'amener la tension fournie par le générateur à une valeur par exemple voisine de 2 000 volts, ce qui permet à la locomotive de tirer le train à des vitesses relativement faibles. Les moyens d'élévation de la basse tension sortant du générateur autonome peuvent être disposés soit sur le wagon muni de ce générateur, soit directement au niveau de la locomotive.

L'invention va être décrite ci-dessous, en référence au dessin annexé, donné uniquement à titre d'exemple et dans lesquels :
- La figure 1 est une vue schématique d'une rame conforme à l'invention, alimentée en énergie électrique par une cellule fixe ;
- La figure 2 est une vue schématique d'un train à alimentation électrique comprenant deux rames conformes à l'invention, alimentées en énergie électrique par une caténaire ;
- La figure 3 est une vue schématique, à plus grande échelle que la figure 1, d'un wagon appartenant à une rame conforme à une variante de réalisation de l'invention.

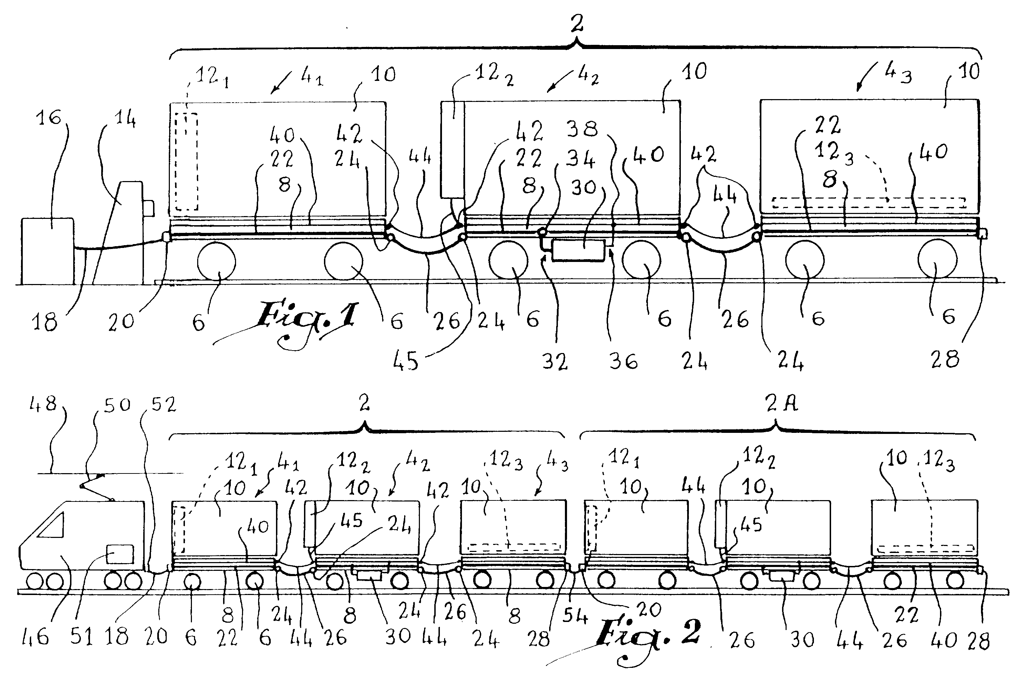

La figure 1 représente une rame de transport ferroviaire conforme à l'invention, désignée dans son ensemble par la référence 2. Cette rame est constituée de trois wagons 4 dont chacun comprend des roues 6 surmontées d'une plateforme de transport 8 sur laquelle repose une cellule de stockage 10 de forme sensiblement parallélépipédique. Cette cellule peut bien entendu être de forme quelconque, notamment cylindrique.

Chaque cellule de stockage 10 est assujettie sur sa plateforme de transport 8 au moyen de systèmes mécaniques standards de fixation éventuellement complétés par des dispositifs de positionnement, tels que des pièces d'arrimage et des supports de préhension par pinces. Ces différents éléments sont bien connus et ne sont donc pas représentés.

Chaque cellule de stockage est équipée d'une unité consommatrice d'énergie 12 susceptible d'être alimentée en énergie électrique à une tension voisine de 380 volts.

La nature de chaque unité consommatrice d'énergie dépend de la température à laquelle doivent être stockées les denrées périssables au sein des cellules.

Dans l'exemple représenté, on trouve ainsi un groupe frigorifique électrique 12₁ permettant de maintenir une température voisine de -25°C, un groupe frigorifique diesel électrique 12₂ prévu pour une utilisation en mode diesel lors d'un transport routier et en mode électrique lors d'un transport ferroviaire, qui assure le maintien d'une température voisine de 7°, par exemple pour le transport de fruits, et enfin un plancher chauffant 12₃ permettant de maintenir hors gel les produits contenus dans la cellule de stockage correspondante.

On peut également prévoir une cellule constituée par une citerne calorifique permettant le transport de résines ou de produits chimiques à une température pouvant aller jusqu'à 220°C, en fonction de la nature des produits transportés.

La rame est représentée à l'arrêt, à proximité immédiate d'un butoir 14. Dans ce qui suit, et pour plus de clarté dans la description, on conviendra que l'extrémité avant de la rame est adjacente au butoir de sorte que le wagon 4₁ est le wagon de tête, le wagon 4₂ est le wagon intermédiaire et le wagon 4₃ est le wagon de queue.

La rame est connectée à une cellule fixe d'alimentation 16 délivrant une énergie électrique à une tension voisine de 1 500 volts, que l'on appellera par la suite haute tension et qui est habituelle dans le transport ferroviaire. Cette cellule d'alimentation 16 peut être installée à demeure, mais peut être également transportable par exemple par semi-remorque.

Les moyens de connexion de la cellule 16 d'alimentation à la rame 2 sont constitués par un cordon haute tension 18 dont une première extrémité est reliée à la cellule d'alimentation 16, et une seconde extrémité est reliée à un coupleur haute tension 20 disposé à l'extrémité avant du premier wagon 4₁ de la rame.

La rame comprend des moyens de transfert vers chaque wagon, de l'énergie électrique à haute tension. Ces moyens de transfert comprennent des lianes électriques 22 reliant les extrémités opposées de chaque wagon, et des borniers haute tension 24 alimentés par les lignes 22 et disposés respectivement à l'extrémité arrière du wagon de tête 4₁, aux deux extrémités du wagon intermédiaire 4₂ et à l'extrémité avant du wagon de queue 4₃. Des cordons haute tension 26, analogues au cordon 18, relient en outre les borniers 24 disposés sur les extrémités adjacentes respectivement du wagon de tête et du wagon intermédiaire, ainsi que du wagon intermédiaire et du wagon de queue.

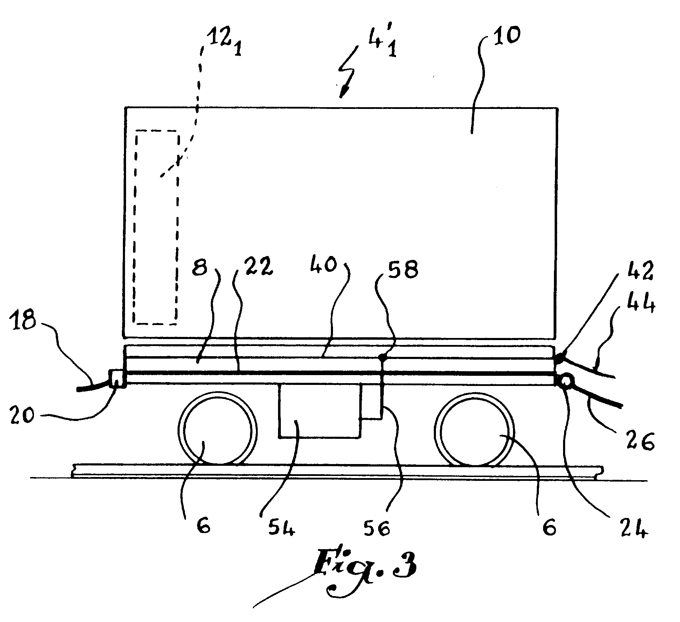

Un coupleur haute tension 28 est prévu à l'extrémité arrière du wagon de queue 4₃, afin de connecter en énergie électrique à haute tension l'ensemble de la rame 2 avec une rame analogue, comme cela sera expliqué en regard de la figure 2.

Un boîtier 30 d'électronique de puissance et d'informatique embarquées est disposé sur le wagon intermédiaire 4₂. L'entrée 32 du boîtier est connectée à la ligne haute tension 22 par l'intermédiaire du bornier haute tension 34, et se trouve donc alimentée en énergie électrique haute tension. Le boîtier 30 inclut un abaisseur de tension associé avec un convertisseur, de sorte que la sortie 36 de ce boîtier délivre une énergie électrique à une tension sensiblement inférieure à la tension d'entrée. Cette tension de sortie, appelée par convention basse tension, est en l'occurrence sensiblement égale à 380 volts triphasés, avec une fréquence de 50 hertz ou 60 hertz.

La sortie 36 du boîtier 30 permet d'alimenter, par l'intermédiaire d'un bornier basse tension 38, une ligne basse tension 40 qui s'étend d'une extrémité à l'autre de chaque wagon de la rame 2. De manière analogue à la ligne haute tension 22, la ligne basse tension 40 est disposée entre des borniers basse tension 42 prévus aux extrémités avant et arrière du wagon intermédiaire, ainsi qu'à l'extrémité avant du wagon de queue et à l'extrémité arrière du wagon de tête. Les borniers basse tension adjacents de wagons voisins sont en outre reliés par des cordons basse tension 44.

l'alimentation électrique de chaque unité 12 est assurée par un connecteur électrique non représenté permettant de connecter la plateforme de transport 8 à la cellule de stockage 10 correspondante. Un tel connecteur électrique peut être par exemple conforme à celui décrit dans FR-A-2 707 804 au nom de la Demanderesse, ou bien encore à usage manuel ou de tout autre type. Ce connecteur électrique peut être associé à un bornier basse tension 42, comme cela est le cas au niveau des extrémités arrière du wagon de tête, avant et arrière du wagon intermédiaire et avant du wagon de queue, et être relié à l'unité consommatrice d'énergie par un cordon basse tension 45.

La figure 2 représente un train en ordre de marche, composé de deux rames 2, 2A identiques à celles décrites à la figure 1. Ces rames sont entraînées par une locomotive 46 alimentée en énergie électrique depuis une caténaire 48 par l'intermédiaire d'un pantographe 50.

La locomotive 46 est pourvue d'une source d'alimentation 51 en énergie électrique à haute tension des rames 2, 2A, qui délivre une tension voisine de 1 500 volts, de manière analogue à la cellule fixe d'alimentation représentée à la figure 1. Cette source 51 est elle-même alimentée par la caténaire 48 et comprend des moyens d'abaissement de la tension, dans le cas où la caténaire délivre une tension sensiblement supérieure à 1 500 volts.

L'exemple représenté fait uniquement référence à une locomotive électrique. Elle trouve cependant aussi son application à des locomotives mues par des énergies différentes. La source 51 est alors placé en aval d'un moyen de conversion de cette énergie motrice en énergie électrique, tel qu'un alternateur dans le cas d'une locomotive diesel.

En faisant à nouveau référence à la figure 2, la ligne 22 à haute tension de la rame 2 est alimentée par la source 51 solidaire de la locomotive 46. A cet effet, un coupleur 52 analogue au coupleur 20 disposé sur l'extrémité avant du wagon de tête de la première rame 2, est prévu à l'extrémité arrière de la locomotive 46. Ce coupleur 52 est relié électriquement au coupleur 20 par l'intermédiaire du cordon 18, lequel, dans le cas de l'alimentation d'une rame fixe, était connecté à la cellule d'alimentation 16. Le coupleur 52 est également relié électriquement au pantographe 50 par des moyens non représentés bien connus.

Comme dans le cas d'une alimentation par la cellule fixe 16 de la figure 1, chaque unité 12 se trouve alimentée en énergie par l'intermédiaire de la ligne haute tension 22, du boîtier 30 d'électronique de puissance et d'informatique embarquées, de la ligne basse tension 40 et des moyens non représentés de connexion électrique entre chaque plateforme de roulement 8 et sa cellule de stockage associée 10.

De plus, la rame 2 permet l'alimentation en énergie électrique haute tension de la rame 2A, grâce à la coopération des coupleurs haute tension 28 et 20, prévus respectivement à l'extrémité arrière de la rame 2 et à l'extrémité avant de la rame 2A, et d'un cordon haute tension 54 connectant électriquement ces deux coupleurs.

La rame 2A est donc alimentée en énergie électrique haute tension, ce qui assure le fonctionnement de chacune de ses unités 12, de manière analogue à ce qui a été décrit ci-dessus pour la rame 2. La rame 2A est en outre susceptible d'alimenter en énergie électrique haute tension une rame supplémentaire non représentée, grâce au coupleur haute tension 28 placé à son extrémité arrière, qui peut être relié à un coupleur haute tension de la rame supplémentaire non représentée.

La figure 3 illustre un wagon appartenant à une rame conforme à une variante de réalisation de l'invention. Ce wagon, désigné dans son ensemble par la référence 4'₁ est sensiblement analogue au wagon de tête 4₁ des figures précédentes, les éléments communs à ces deux wagons étant désignés par les mêmes numéros de référence.

Le wagon 4'₁ comprend en outre, assujetti sur la face inférieure de la plateforme de transport 8, un générateur autonome 54. Ce dernier, qui est représenté de manière schématique sur la figure 3, inclut une machine thermique et son environnement, à savoir un système de démarrage, par démarreur, batterie ou chargeur, un système de régulation ainsi qu'un réservoir de carburant, tel que du gas-oil ou du gaz. Ce générateur est en outre équipé, si nécessaire, d'un embrayage centrifuge ou d'une transmission ainsi qu'un système de radio télé-commande.

La sortie 56 du générateur 54 est reliée à la ligne basse tension 40 s'étendant le long du wagon 4'₁, par l'intermédiaire d'un bornier basse tension 58. L'énergie électrique basse tension délivrée par le générateur 54 est donc à même d'être transmise le long de la rame, de manière à alimenter les unités consommatrices d'énergie 12, notamment en cas de panne du boîtier 30. Cependant, il est prévu, grâce à des moyens de coupure, que le générateur 54 ne puisse pas fonctionner en même temps que le convertisseur dont est équipé le boîtier 30.

Il est également envisageable de connecter la sortie 56 à une autre ligne basse tension analogue à celle 40, puis de relier cette autre ligne à la locomotive 46, de manière à assurer son alimentation en énergie basse tension. On peut également prévoir des moyens d'élévation de la tension fournie par la sortie 56 du générateur 54, puis de diriger l'énergie haute tension ainsi obtenue vers la locomotive.

Il est également envisageable de relier directement la sortie 56 du générateur 54 à un moteur situé sur l'essieu de l'une des roues 6. Le générateur 54 assure alors une fonction de propulsion de la rame, de manière analogue à ce que l'on rencontre dans le cas d'un tramway ou d'un trolley-bus.

L'invention n'est pas limitée aux exemples décrits et représentés. Elle trouve en effet son application à des cellules de stockage de tout type et en particulier de forme quelconque, notamment non parallélépipédique.

Le nombre de wagons, constituant chaque rame, ainsi que le nombre de rames constituant l'ensemble du train est bien évidemment variable. On peut également envisager des sources d'énergie électrique et des unités consommatrices dont les tensions seraient différentes de celles mentionnées dans la description.

Enfin, l'invention ne s'applique pas exclusivement à des cellules de stockage sous température contrôlée, dans la mesure où le dispositif conforme à l'invention peut alimenter d'autres unités consommatrices d'énergie électrique d'une rame de transport ferroviaire. On citera à titre d'exemple non limitatif des unités dites "intelligentes" équipant les wagons eux-mêmes, telle que des freins électro-pneumatiques ou électroniques, un dispositif anti-enrayeur, des détecteurs de boîtes chaudes, des systèmes de transmission d'alarme en temps réel garantissant une sûreté accrue des marchandises et des systèmes de traçabilité, destinés à la localisation des rames et des cellules de stockage.

## Revendications

1. Rame de transport ferroviaire (2), du type comportant plusieurs wagons (4) comprenant chacun une plateforme de transport (8) destinée à recevoir des cellules de stockage (10), notamment sous température contrôlée, lesdits wagons (4) ou lesdites cellules de stockage (10) étant équipés d'unités consommatrices d'énergie électrique (12), caractérisée en ce qu'elle comprend :
- des moyens de connexion (18, 20, 50, 52) de ladite rame (2) à une source d'énergie électrique (16 ; 48) délivrée à une première tension, ou haute tension, supérieure à la tension nominale d'utilisation desdites unités consommatrices d'énergie électrique (12) ;
- des moyens de transfert (22, 24, 26) vers chaque wagon (4) d'énergie électrique à ladite haute tension ;
- des moyens d'abaissement (30) de la tension, comprenant une entrée (32) reliée auxdits moyens de transfert (22, 24, 26) d'énergie électrique à ladite haute tension, et une sortie (36) à partir de laquelle l'énergie électrique est délivrée à une seconde tension ou basse tension, voisine de la tension nominale d'utilisation desdites unités consommatrices d'énergie (12); et
- des moyens de répartition (40, 42, 44, 45) de l'énergie électrique à basse tension vers chaque unité consommatrice d'énergie électrique (12).

2. Rame selon la revendication 1, caractérisée en ce que la source d'énergie électrique haute tension est une source (51) solidaire d'une locomotive (46) assurant l'entraînement de ladite rame (2).

3. Rame selon la revendication 2, caractérisée en ce que les moyens de connexion de la rame à la source (51) solidaire de la locomotive (46) comprennent un premier coupleur (20) disposée sur la rame (2), un second coupleur (52) disposé sur la locomotive (46), un cordon électrique haute tension (18) reliant lesdits premier et second coupleurs, et des moyens de connexion (50) entre la source (51) et le second coupleur (52).

4. Rame selon l'une des revendications 1 à 3, caractérisée en ce que la source d'énergie électrique est une cellule fixe d'alimentation haute tension (16).

5. Rame selon la revendication 4, caractérisée en ce que les moyens de connexion de la rame (2) à la cellule fixe d'alimentation haute tension (16) comprennent un coupleur (20) disposé sur la rame (2) et relié à ladite cellule fixe (16) par un cordon électrique haute tension (18).

6. Rame selon l'une des revendications 1 à 5, caractérisée en ce que les moyens de transfert vers chaque wagon d'énergie électrique à haute tension comprennent des lignes électriques haute tension (22) reliant des borniers haute tension (24) disposés à l'extrémité de chaque wagon (4), et des cordons électriques haute tension (26) reliant les borniers haute tension (24) des extrémités adjacentes de wagons voisins.

7. Rame selon l'une des revendications 1 à 6, caractérisée en ce que les moyens d'abaissement de la tension (30) sont associés à un convertisseur.

8. Rame selon l'une des revendications 1 à 7, caractérisée en ce que les moyens de répartition de l'énergie électrique à basse tension comprennent des lignes électriques basse tension (40) reliant des borniers basse tension (42) disposés à chaque extrémité de chaque wagon, des cordons électriques basse tension (44) reliant les borniers basse tension (42) des extrémités adjacentes de wagons voisins, et éventuellement des moyens de connexion électrique (45) entre chaque plateforme de roulement (8) et sa cellule de stockage (10) correspondante.

9. Rame selon l'une des revendications 1 à 8, caractérisée en ce qu'au moins l'un (4'₁) des wagons est muni d'un générateur autonome (54) apte à délivrer de l'énergie électrique à ladite basse tension.

10. Rame selon la revendication 9, caractérisée en ce que la sortie (56) dudit générateur autonome (54) est connectée aux moyens de répartition (40, 42, 44, 45) de l'énergie électrique à basse tension.

11. Rame selon l'une des revendications 9 ou 10, comprenant au moins un wagon comportant un logement de réception d'une remorque routière, ou poche, caractérisée en ce que lesdits moyens d'abaissement de la tension et/ou ledit générateur autonome sont disposés dans ledit logement.

12. Train à alimentation électrique, comprenant une locomotive et plusieurs rames (2, 2A) dont chacune est composée de plusieurs wagons (4), caractérisé en ce que chaque rame est conforme à l'une des revendications 1 à 11, et en ce qu'il est prévu, entre deux rames voisines, des moyens de connexion (20, 25, 58) en énergie électrique à haute tension.

13. Train selon la revendication 12, caractérisé en ce que les moyens de connexion entre deux rames (2, 2A) comprennent des coupleurs haute tension (20, 28) disposés aux extrémités adjacentes des rames voisines, reliés par des cordons haute tension (54).

14. Train selon l'une des revendication 12 ou 13 en combinaison avec l'une des revendications 9 à 11, caractérisé en ce que la sortie du générateur autonome est mise en relation avec une unité motrice de la locomotive.

15. Train selon la revendication 14, caractérisé en ce qu'une autre ligne électrique basse tension, disposée dans le wagon muni du générateur, et un autre cordon électrique basse tension, reliant ledit wagon à la locomotive, sont intercalés entre la sortie du générateur autonome et ladite unité motrice.

16. Train selon la revendication 14, caractérisé en ce que des moyens d'élévation de la basse tension délivrée par ledit générateur autonome sont intercalés entre la sortie du générateur autonome et ladite unité motrice.
